# FASCICULE DE BREVET EUROPEEN

(11) **EP 3 446 851 B1**
(45) Date de publication et mention de la délivrance du brevet: **22.04.2020**
(21) Numéro de dépôt: 18306097.9
(22) Date de dépôt: 10.08.2018
(51) Int. Cl.: B29C 49/42, B29C 49/78, B65G 43/08, B65G 43/10, B29C 49/06, B29C 49/36, B65G 47/84

(54) **PROCEDE DE REGLAGE D'UNE INSTALLATION DE TRAITEMENT D'UNE SUCCESSION DE RECIPIENTS ET INSTALLATION ASSOCIEE**
REGULIERUNGSVERFAHREN EINER ANLAGE ZUR BEARBEITUNG EINER FOLGE VON BEHÄLTERN, UND ENTSPRECHENDE ANLAGE
METHOD FOR ADJUSTING AN INSTALLATION FOR TREATING A SERIES OF CONTAINERS AND ASSOCIATED INSTALLATION

(30) Priorité: 21.08.2017 FR 1757767
(43) Date de publication de la demande: 27.02.2019
(73) Titulaire: Sidel Participations, 76930 Octeville-sur-Mer (FR)
(72) Inventeur: SANTAIS, Franck, 76930 Octeville-sur-mer (FR); PETIT, Fabian, 76930 Octeville-sur-mer (FR)
(74) Mandataire: Grassin d'Alphonse, Emmanuel Jean Marie

(56) Documents cités:
- EP-A1- 2 735 538
- WO-A2-2006/097796
- DE-A1-102006 059 001
- DE-A1-102013 014 618

## Description

L'invention concerne le domaine de la fabrication de récipients (notamment bouteilles, flacons) tels que des récipients en matière plastique, telle que par exemple le polyéthylène téréphtalate (PET). L'invention concerne en particulier un procédé de réglage d'une installation de traitement de récipients selon la revendication 1 et une installation de traitement de récipients selon la revendication 8. Les documents EP2735538A1 et DE102006059001A1 décrivent de tels procédés et installations issus de l'arrière plan technologique.

La fabrication de tels récipients est réalisée dans une installation de production d'une succession de récipients, dans laquelle les récipients subissent plusieurs traitements, tels qu'un formage, un remplissage, etc. Une telle installation comporte au moins une première machine de traitement de récipients et une deuxième machine de traitement de récipients équipés chacune de premières stations de traitement et de deuxièmes stations de traitement des récipients.

Selon un exemple connu, les stations de traitement des récipients sont mobiles en rotation entre un point d'entrée des récipients dans la machine et un point de sortie des récipients de ladite machine. Au cours du processus de fabrication, les récipients sont transmis de machine en machine au sein desquelles ils subissent différents traitements. Plus précisément, chaque récipient de la succession de récipients est d'abord reçu dans une première machine au point d'entrée de la première machine, est traité, puis est amené au point de sortie de la première machine pour être transféré à une deuxième machine de traitement en un point d'entrée de la deuxième machine. Le récipient est traité dans la deuxième machine, puis est amené au point de sortie de la deuxième machine pour être transféré à une troisième machine en un point d'entrée de la troisième machine, et ainsi de suite jusqu'au traitement final du récipient.

Ainsi, dans le cas du formage de récipients à partir de préformes, les préformes sont chauffées, puis amenées dans une machine de transfert pour être transférées dans une machine de formage de sorte à conférer à la préforme la forme finale du récipient. Les récipients formés sont à leur tour amenés dans une machine de transfert pour être transférés une machine de remplissage pour être remplis. Il en est ainsi jusqu'au traitement final du récipient. En particulier, les récipients doivent encore, par exemple, être operculés et étiquetés.

Au cours d'un tel processus de fabrication des récipients, de sorte à assurer la fabrication continue des récipients, il est nécessaire de synchroniser les première et deuxième machines de traitement de l'installation afin de transférer un récipient reçu dans une première station à une deuxième station d'une deuxième machine de traitement. Autrement dit, lorsque qu'une première station dans laquelle est reçu un récipient, est au point de sortie de la première machine de traitement, une deuxième station doit se trouver au point d'entrée de la deuxième machine afin de lui transférer le récipient, étant entendu, que le point de sortie de la première machine correspond au point d'entrée de la deuxième machine de traitement. En d'autres termes, selon l'exemple décrit ci-dessous, lorsqu'une station de transfert se trouve au point de sortie de la machine de transfert, une station de formage se trouve au point d'entrée de la machine de formage.

En outre, pour assurer la traçabilité des récipients au cours du processus de fabrication, les première et deuxième stations des première et deuxième machines de traitement sont de préférence « appairées », c'est-à-dire que deux stations de deux machines de traitement différentes fonctionnent en coopération pour traiter un récipient. En d'autres termes, dans le cas d'une préforme transmises par une machine de transfert à une machine de formage, une préforme transférée par une station de transfert particulière de la machine de transfert sera toujours formée par la même station de formage de la machine de formage. Un tel appairage d'une première station et d'une deuxième station permet, en cas de détection d'un récipient défectueux, de remonter la chaîne de fabrication et d'identifier la station de traitement du récipient ayant conduit à la fabrication du récipient défectueux. Par ce biais, la traçabilité des récipients est assurée.

Pour assurer la synchronisation et l'appairage d'une première machine de traitement et d'une deuxième machine de traitement, il est connu d'assurer la rotation les premières stations de la première machine de traitement et les deuxièmes stations de la deuxième machine de traitement par l'intermédiaire de courroies de transmission. Par ce biais, on assure la mise en rotation synchronisée mais aussi l'appairage des premières et des deuxièmes stations.

Grâce à l'asservissement mécanique des première et deuxième machines de traitement au moyen des courroies de transmission, on comprend qu'il n'est pas possible de perdre la synchronisation de la rotation des premières et deuxièmes machines, ni l'appairage des premières stations et des deuxièmes stations, par exemple après un arrêt des machines.

Cependant, du fait de ce type de transmission du mouvement de rotation autour d'un axe commun de rotation, en cas de la présence d'une machine de traitement défectueuse et/ou d'une station de traitement défectueuse, il est nécessaire d'arrêter la rotation de l'ensemble des machines du groupe de machines entraîné par l'axe commun de rotation, et non pas la rotation de certaines d'entre elles. Hors, les machines de traitement mises en oeuvre dans de telles installations de fabrication de récipients sont des machines lourdes et volumineuses, qui nécessitent un certain temps à être arrêtées et à être redémarrées. Il est donc fastidieux et complexe d'arrêter et de redémarrer toutes les machines en même temps.

Par ailleurs, en cas de problème sur l'une ou l'autre des machines et/ou des stations, il est souhaitable, de pouvoir arrêter la machine défectueuse tout en maintenant la rotation d'autres machines de l'installation, par exemple de sorte à vider la chaîne de production ou de continuer le formage des préformes qui ont déjà été chauffées dans la station de chauffage, pour ensuite les stocker dans une zone dédiée.

Il est donc avantageux de mettre en rotation les machines de traitement de l'installation indépendamment les unes des autres de sorte à pouvoir arrêter certaines machines de traitement et à continuer la rotation des autres. Cependant, avec un tel arrangement, il est possible de perdre la synchronisation des premières et deuxièmes machines mais également l'appairage des premières et deuxièmes stations lors du redémarrage de la ou des machine(s) mise(s) à l'arrêt.

En outre, les courroies de transmission assurant l'asservissement des machines de traitement posent des problèmes d'usure.

L'un des buts de l'invention est pallier les inconvénients ci-dessus en proposant un procédé de réglage d'une installation de production d'une succession de récipients, permettant de synchroniser et d'appairer les stations des machines de traitement, notamment après un arrêt d'une ou de plusieurs machine(s) de traitement.

A cet effet, l'invention concerne un procédé de réglage d'une installation de traitement d'une succession de récipients comprenant :
une phase de fonctionnement au cours de laquelle on entraine en rotation une première machine de traitement de récipients équipée d'une pluralité de premières stations et on entraine en rotation une deuxième machine de traitement de récipients équipée d'une pluralité de deuxièmes stations, l'installation présentant un point de transfert de chacun des récipients de la première à la deuxième machine de traitement
la phase de fonctionnement comprenant une étape de fonctionnement synchronisé dans laquelle les vitesses de rotation des premières et deuxièmes machines de traitement sont synchronisées de manière que la fréquence de passage de deux premières stations successives au point de transfert est égale à la fréquence de passage de deux deuxièmes stations successives au même point de transfert,
la phase de fonctionnement comprend une étape de fonctionnement synchronisé et appairé dans laquelle la rotation synchronisée des première et deuxième machines s'accompagne d'une succession répétitive de binômes d'appairage au point de transfert, chaque binôme d'appairage comprenant une première station arrivant au point de transfert au même instant qu'une deuxième station de manière à permettre le transfert d'un récipient de la première station du binôme d'appairage vers la deuxième station du binôme d'appairage,
le procédé de réglage étant caractérisé en ce que l'entrainement en rotation de la première machine de traitement se fait au moyen d'un premier moteur d'entrainement, l'entrainement de la deuxième machine de traitement se fait au moyen d'un deuxième moteur d'entrainement distinct du premier moteur, le procédé de réglage comprenant une étape d'appairage désynchronisé au cours de laquelle on entraine en rotation la première machine de traitement et/ou la deuxième machine de traitement dans un fonctionnement désynchronisé entre elles de manière à amener en coïncidence au même moment au point de transfert une première station et une deuxième station d'un des binômes d'appairage.

On comprend que le mouvement de rotation de la première machine de traitement et celui de la deuxième machine de traitement sont indépendants l'un de l'autre. Par ailleurs, on comprend aussi qu'on peut connaitre, à chaque instant, la position des stations de traitement des machines de traitement de l'installation de production.

Grâce à ces dispositions, il est en particulier possible d'automatiser le réglage de l'installation pour synchroniser la rotation des machines de traitement et pour appairer les première et deuxième stations des première et deuxième machines de traitement. Les binômes d'appairage permettent de faire un lien entre la station qui a traité le récipient dans la deuxième machine de traitement et la station qui a traité le récipient dans la première machine de traitement, car le récipient traité est passé de l'une à l'autre des stations du binôme d'appairage au point de transfert. Ainsi, en cas de détection d'un récipient défectueux, on peut identifier la station de traitement du récipient ayant conduit à la fabrication du récipient défectueux. Cela permet d'assurer la traçabilité des récipients fabriqués dans l'installation de production.

On dit que la vitesse de rotation de la première machine de traitement est synchronisée avec la vitesse de rotation de la deuxième machine de traitement lorsque ces vitesses ont entre elles un rapport tel que la fréquence de passage de deux premières stations successives au point de transfert est égale à la fréquence de passage de deux deuxièmes stations successives au même point de transfert. Autrement dit, le produit de la vitesse de rotation de la première machine multipliée par le nombre de premières stations est égal au produit de la vitesse de rotation de la deuxième machine multipliée par le nombre de deuxièmes stations. Les première et deuxième machines de traitement sont « désynchronisées » dans le cas contraire, c'est-à-dire que l'une des machines de traitement présente une survitesse par rapport à la vitesse de synchronisation.

On entend par récipient, aussi bien une préforme destinée à être transformée en récipient, que le récipient final lui-même, destiné à recevoir un produit liquide.

De plus, lors de la phase de désynchronisation, du fait que le mouvement de rotation de la première machine est indépendant du mouvement de rotation de la deuxième machine, il est possible de choisir la machine dont on veut modifier la vitesse de rotation. Ceci est particulièrement avantageux dans de telles installations de production d'une succession de récipients. En effet, comme mentionné précédemment, le machines de traitement sont lourdes et volumineuses, et nécessitent un certain temps avant d'acquérir leur vitesse de rotation de travail. En d'autres termes, ces machines ont un moment d'inertie important et nécessitent un certain temps pour effectuer leur montée en puissance. Alors, il est avantageux de modifier la vitesse de rotation d'une machine moins lourde dont on peut maîtriser plus facilement la rotation. En outre, il est particulièrement avantageux de modifier la vitesse de rotation de l'une des machines de traitement, par exemple lors de la montée en puissance de l'autre machine de traitement. Cela permet de gagner du temps dans le réglage de l'installation de production d'une succession de récipient.

Avantageusement, le procédé est un procédé de réglage d'une installation de production d'une succession de récipients à partir d'une succession de préformes, et dans lequel :
la première machine de traitement est une roue d'amenée des préformes et la deuxième machine de traitement est une machine de formage de récipients par soufflage des préformes,
ou dans lequel la première machine de traitement est une machine de formage de récipients à partir de préformes et la deuxième machine de traitement est une roue de sortie de récipients formés.

Selon un mode de réalisation, au cours de l'étape d'appairage désynchronisé, on détermine à un instant donné, d'une part la distance angulaire entre une première station d'un des binômes d'appairage et le point de transfert, et d'autre part la distance angulaire entre la deuxième station dudit binôme d'appairage au même point de transfert, l'une des première ou deuxième machine présente une survitesse de rotation par rapport à la vitesse qu'aurait ladite première et deuxième machine de traitement si elles étaient synchronisées, la survitesse étant calculée de manière à amener progressivement en coïncidence au même moment au point de transfert la première station et la deuxième station dudit binôme d'appairage.

Dans le mode de réalisation précité, la phase d'appairage désynchronisé peut de manière optionnelle être suivie d'un fonctionnement synchronisé et appairé. En particulier, la survitesse peut avantageusement être régulée de manière à optimiser la souplesse de la transition entre la phase d'appairage désynchronisé et la phase suivante de fonctionnement synchronisé et appairé.

Dans le mode de réalisation précité, la survitesse peut être régulée de manière à optimiser la rapidité et/ou la précision de la phase d'appairage désynchronisé.

Grâce à ces dispositions, on réalise l'appairage de manière particulièrement simple et rapide. Par ailleurs, cette synchronisation peut se réaliser de manière automatique.

Comme expliqué précédemment, on comprend qu'il est avantageux d'augmenter la vitesse de rotation d'une machine de traitement moins lourde qu'une autre, autrement dit de celle qui possède le moment d'inertie le plus faible. Ceci permet d'une part d'obtenir une montée rapide en rotation de ladite machine mais également de mieux maîtriser la rotation de la première machine. Ces dispositions permettent également de mieux contrôler la décélération de ladite machine en vue de l'étape suivante de synchronisation. De plus, comme mentionné précédemment, cela permet, pendant la montée en puissance de la deuxième machine, de réaliser l'appairage des première et deuxième stations des machines de traitement. Grâce à ces dispositions, on règle plus rapidement l'installation de production d'une succession de récipients.

Selon un mode de réalisation, le procédé comprend, antérieurement à la phase d'appairage désynchronisé, une étape préalable de mise en phase non-appairée faisant coïncider au point de transfert une première station et une deuxième station, ne correspondant pas à un des binômes d'appairage, l'étape de mise en phase non-appairée comprenant :
- amener l'une des machines parmi la première ou la deuxième machine de traitement à ce qu'une des stations de ladite machine arrive au point de transfert, puis immobiliser ladite machine, de préférence, la station de ladite machine qui est la plus proche du point de transfert,
- amener l'autre machine parmi la première ou la deuxième machine de traitement à ce qu'une des stations de ladite machine arrive au point de transfert.

Selon une variante, le procédé comprend, entre l'étape préalable de mise en phase non-appairée, et l'étape d'appairage désynchronisé, une étape intermédiaire de fonctionnement synchronisé et en phase mais non-appairé.

Avantageusement, le procédé de réglage comprend en outre l'étape de :
- détection de la présence de récipients dans l'une ou l'autre des première (8) et deuxième machines de traitement, et
   si l'une ou l'autre des première et deuxième machines de traitement comporte au moins un récipient,
- mettre en attente l'étape d'appairage désynchronisé,
- vider les récipients de l'une ou des deux machines de traitement, et
- effectuer l'étape d'appairage désynchronisé.

Grâce à ces dispositions, on sécurise le procédé de réglage de l'installation de production. En particulier, on évite la percussion des récipients reçus dans les premières stations avec les deuxièmes stations de la deuxième machine. Par exemple, si les premières stations sont des stations de soufflage de préformes et les deuxièmes stations sont des bras de préhension, l'étape de mise en phase non-appairée permet d'évacuer simplement un récipient d'un moule. L'étape intermédiaire de fonctionnement synchronisé et en phase mais non-appairé permet d'évacuer simplement une série de récipients défectueux des moules, avant de poursuivre l'appairage de l'installation.

Selon un deuxième aspect, l'invention concerne une installation de traitement d'une succession de récipients comprenant au moins :
- une première machine de traitement de récipients, comprenant une pluralité de premières stations mobiles en rotation, ladite première machine de traitement étant entraînée en rotation par un premier moteur synchrone,
- une deuxième machine de traitement de récipients, comprenant une pluralité de deuxièmes stations mobiles en rotation, ladite deuxième machine de traitement étant entraînée en rotation par un deuxième moteur synchrone,
chaque récipient de la succession de récipients étant transféré à une deuxième station en un point de transfert,
caractérisée en ce que l'installation présente une succession de binômes d'appairage comprenant chacun une première station et une deuxième station, ainsi qu'une unité de contrôle pilotant le premier et le deuxième moteur synchrone de manière à amener au même instant au point de transfert la première station et le deuxième station d'un binôme d'appairage.

Selon d'autres caractéristiques de l'installation :
- chaque récipient de la succession de récipients est reçu par une première station en un point d'entrée de la première machine de traitement et est délivré en un point de sortie de la deuxième machine de traitement, et/ou dans laquelle l'unité de contrôle pilote le premier et le deuxième moteur synchrone de manière à amener successivement au point de transfert la première station et le deuxième station des binôme d'appairage successifs.
- les première et deuxième machines de traitement comportent des première et deuxième roues d'entraînement en rotation des premières et deuxièmes stations, les premières et deuxièmes stations étant régulièrement réparties angulairement respectivement sur chacune des première et deuxième roues d'entraînement en rotation.
- les premières et deuxièmes stations sont mises en rotation autour de deux axes (A, A') de rotation indépendants l'un de l'autre.
- la première machine de traitement est une machine de transfert de récipients et la deuxième machine de traitement est une machine de formage de récipients, les premières stations comprenant des éléments de préhension des récipients et les deuxièmes stations comprenant des stations de formage des récipients.
- chaque moteur synchrone comprend un codeur de position angulaire.

Avantageusement, l'une des première ou deuxième machine de traitement est une machine principale de traitement, comprenant Np stations principales, l'autre des première ou deuxième machines de traitement est une machine auxiliaire de traitement comprenant Na stations auxiliaires, Np étant égale au produit de Na par un entier k supérieur ou égale à un.. Ainsi, le nombre de binômes d'appairage est de Np. Chaque station principale est appairée à une seule station auxiliaire. Chaque station auxiliaire est appairée à k stations principale ;

D'autres aspects et avantages de l'invention apparaîtront à la lecture de la description qui suit, donnée à titre d'exemple et faite en se référence aux dessins annexés, dans lesquels :
- la Fig. 1 est une représentation schématique de dessus d'une installation de production de récipients, comprenant une station de chauffage, une machine de transfert et une machine de formage,
- les Fig. 2 et 3 correspondent respectivement à une liste de binômes d'appairage des stations de traitement de la machines de transfert et des stations de la machine de formage, et à une liste de mise en phase initiale, non-appairée,
- les Fig. 4 et 5 sont des représentations schématiques, de dessus, des machines de transfert et de formage durant une étape de mise en phase non-appairée des premières et deuxième machines de traitement,
- la Fig. 6 est une représentation schématique, de dessus, des machines de transfert et de formage durant une étape intermédiaire de fonctionnement synchronisé et en phase mais non-appairé des premières et deuxième machines de traitement,
- la Fig. 7 est une représentation schématique, de dessus, des machines de transfert et de formage durant une étape d'appairage désynchronisé de la rotation des machines de transfert et de formage, et
- la Fig. 8 est une représentation schématique, de dessus, des machines de transfert et de formage durant une étape de fonctionnement synchronisé et appairé de la rotation de la machine de formage et de la machine de transfert.

Au sens de la présente invention, les termes « appairées », « appairage », etc., signifient que chaque deuxième station d'une deuxième machine de traitement est associée à une première station identifiée d'une première machine de traitement de sorte que lorsque ladite première station se trouve au point de sortie de la première machine de traitement, la deuxième station associée se trouve au point d'entrée de la deuxième machine de traitement.

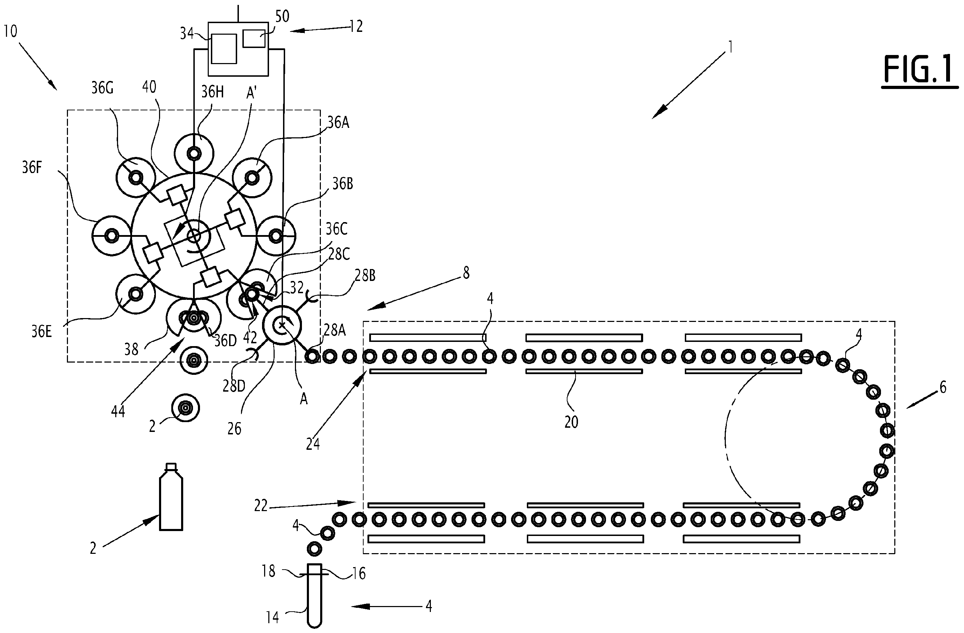

En référence à la Fig. 1 on décrit une installation de production 1 d'une succession de récipients 2 à partir de préformes 4 en matière plastique.

L'installation comprend au moins une station de chauffage 6, une première machine de traitement de récipients 8, par exemple une machine de transfert d'une succession de récipients, une deuxième machine de traitement de récipients 10, par exemple une machine de formage d'une succession de récipients, et une unité de contrôle **12** de l'installation de production 1.

Chaque préforme 4 comprend un corps **14,** un col **16** et une bague **18.** Le corps 14 présente par exemple la forme d'un tube à essai avec un fond fermé et définit un volume interne. Le col 16 s'étend dans la continuité du corps 14 à l'opposé du fond et forme une ouverture supérieure par laquelle un fluide peut être introduit dans le volume interne de la préforme. Le col 16 de la préforme présente par exemple la forme définitive qu'il aura dans le récipient 2 formé à partir de la préforme 4 et comprend, par exemple, un filetage sur sa paroi externe pour permettre la fixation d'un bouchon sur le récipient. La bague 18 s'étend entre le corps 14 et le col 16 radialement vers l'extérieur et forme par exemple une bague de transport par laquelle la préforme peut être saisie et transportée. La forme de préforme donnée ci-dessus ne l'est qu'à titre d'exemple et d'autres formes pourraient être envisagées, tant que celles-ci sont appropriées pour former un récipient par introduction d'un fluide dans la préforme. Ainsi, à titre d'exemple, la préforme pourrait présenter un col lisse, être dépourvue de bague, et/ou avoir d'autres variantes de formes selon divers modèles de préforme susceptibles d'être utilisés dans l'installation de production 1. La matière plastique de la préforme est par exemple du polyéthylène téréphtalate (PET). En variante, la matière plastique pourrait être différente du PET, tant que cette matière est susceptible d'être rendue malléable et déformable pour permettre la réalisation d'un récipient par introduction d'un fluide dans la préforme.

La station de chauffage 6 est agencée pour chauffer chaque préforme 4 à une température de référence à laquelle la préforme 4 est dans un état malléable et peut être formée en un récipient. La température de référence est comprise entre la température de transition vitreuse et la température de cristallisation du matériau de la préforme 4. La station de chauffage 6 comprend par exemple une pluralité d'éléments de chauffage répartis dans la station de chauffage 6 selon un trajet des préformes 4 dans la station de chauffage et agencés pour chauffer la succession de préformes 4 se déplaçant devant les éléments de chauffage grâce à un dispositif de transport ou convoyeur **20** de la station de chauffage 6. Le trajet des préformes 4 dans la station de chauffage s'étend entre une entrée **22** et une sortie **24** de la station de chauffage. Une telle station de chauffage 6 étant connue en soi, elle ne sera pas décrite plus en détail ici.

En sortie de la station de chauffage 6, les préformes chauffées sont déplacées jusqu'à la machine de formage 10 par la machine de transfert 8.

La machine de transfert 8 comporte par exemple une roue de transfert **26,** mobile en rotation autour d'un axe **A** de rotation, et une pluralité de premières stations de traitement **28A, 28B, 28C, 28D** de la succession de préformes 4. Dans le cas d'espèce, les premières stations de traitement **28A, 28B, 28C, 28D** sont des éléments de préhension des préformes.

Le nombre de roues de transfert 26 de la machine de transfert 8 peut varier d'une installation de production à une autre et dépend de l'agencement de l'installation de production 1. Une seule roue de transfert 26 pourrait être prévue entre la sortie 24 de la station de chauffage 6 et la machine de formage 8, comme représenté sur la Fig. 1.

La roue de transfert 26 est pourvue, en périphérie, des éléments de préhension 28A, 28B, 28C, 28D. Les éléments de préhension 28A, 28B, 28C, 28D sont régulièrement répartis angulairement sur la périphérie de la roue de transfert 26. Dans l'exemple particulier décrit ici, la roue de transfert 26 comporte quatre éléments de préhension 28A, 28B, 28C, 28D, séparés angulairement les uns des autres d'un angle sensiblement égal à 90°. En variante, la roue de transfert 26 pourrait comprendre plus ou moins d'éléments de préhension.

Chaque élément de préhension 28A, 28B, 28C, 28D, par exemple du type pince ou autre, est agencé pour saisir une préforme 4 de la succession de préformes, par exemple par sa bague 18 et pour la transporter jusqu'à la station de formage 10.

Pour ce faire, les éléments de préhension 28A, 28B, 28C, 28D sont mobiles en rotation entre un point d'entrée **30** et un point de sortie **32** de la machine de transfert 8. Plus précisément, les éléments de préhension 28A, 28B, 28C, 28D se déplacent selon un trajet circulaire défini par la roue de transfert 26 entre le point d'entrée 30 et le point de sortie 32 de la machine de transfert 8.

Dans l'exemple, au point d'entrée 30 de la machine de transfert 8, un des éléments de préhension 28A, 28B, 28C, 28D est propre à prélever une préforme 4 arrivant à la sortie 24 de la station de chauffage 6 et à l'amener au point de sortie 32 de ladite machine de transfert 8 pour la transférer à la machine de formage 10.

La machine de transfert 8 est par ailleurs un dispositif de transport positif, c'est-à-dire que le dispositif de transfert 8 est agencé pour que la position d'une préforme 4 soit toujours connue dans l'installation de production 1. Dans le cas d'espèce, la machine de transfert 8 est entraînée en rotation autour de l'axe A au moyen d'un premier moteur synchrone. Plus précisément, la roue de transfert 26 est entraînée en rotation par le premier moteur synchrone. La position angulaire d'un moteur synchrone étant connue à tout instant, il est donc possible de connaître la position de la roue de transfert 26 à chaque instant, et donc d'en déduire la position des éléments de préhension 28A, 28B, 28C, 28D dans l'installation de production 1 à chaque instant. De ce fait, on connait à chaque instant la position d'une préforme 4 dans la machine de transfert, et plus généralement dans l'installation de production 1. En particulier, à chaque instant, la position angulaire des éléments de préhension 28A, 28B, 28C, 28D par rapport au point de sortie 32 de la machine de transfert 8 est connue.

La deuxième station de traitement de la succession de préformes 4, c'est-à-dire la machine de formage 10, comprend une pluralité de deuxième stations de traitement **36A, 36B, 36C, 36D, 36E, 36F, 36G, 36H** de la succession de préformes 4. Dans le cas d'espèce, les deuxièmes stations 36A, 36B, 36C, 36D, 36E, 36F, 36G, 36H sont des stations de formage agencées chacune pour recevoir et former une préforme 4 de la succession de préformes 4 en un récipient. A cet effet, chaque station de formage 36A, 36B, 36C, 36D, 36E, 36F, 36G, 36H comprend un moule **38** et un dispositif d'injection d'un fluide de formage, non représenté sur les figures. Le moule 38 comprend une cavité de moulage présentant la forme du récipient à produire et agencée pour recevoir le corps 14 de la préforme 4. Le dispositif d'injection est agencé pour injecter un fluide de formage sous pression dans le volume interne de la préforme 4 par l'ouverture supérieure de celle-ci afin que le corps 14 de la préforme acquière la forme de la cavité de moulage. Le fluide de formage est par exemple un gaz, par exemple de l'air sous pression. Chaque station de formage 36A, 36B, 36C, 36D, 36E, 36F, 36G, 36H peut en outre comprendre une tige d'étirage agencée pour exercer un appui sur le fond de la préforme 4 afin de l'étendre selon son axe.

Ainsi, à titre d'exemple, la machine de formage 10 comprend huit stations de formage. Les stations de formage 36A, 36B, 36C, 36D, 36E, 36F, 36G, 36H sont portées par une roue de formage **40,** ou carrousel, mobile en rotation autour d'un axe de rotation **A'** parallèle à l'axe A de rotation de la roue de transfert 8. Les stations de formage 36A, 36B, 36C, 36D, 36E, 36F, 36G, 36H sont portées sur la périphérie de la roue de formage 40 de sorte qu'elles se déplacent le long d'un trajet circulaire défini par la roue de formage 28, entre un point d'entrée **42** et un point de sortie **44.** Dans l'exemple particulier, la roue de formage 40 comporte huit éléments de préhension 36A, 36B, 36C, 36D, 36E, 36F, 36G, 36H, séparés angulairement les uns des autres d'un angle sensiblement égal à 45°. En variante, la roue de formage 40 pourrait comprendre plus ou moins de stations de formage.

Au point d'entrée 42, le moule 38 est ouvert et est agencé pour recevoir une préforme 4 issue de la roue de transfert 22, puis le moule 26 est fermé. Le dispositif d'injection est placé en communication fluidique avec le volume interne de la préforme et le fluide de formage est injecté dans la préforme au cours du déplacement de la station de formage 36A, 36B, 36C, 36D, 36E, 36F, 36G, 36H entre le point d'entrée 42 et le point de sortie 44. Au point de sortie 44, le moule 38 est ouvert et le récipient formé est extrait de la station de formage 24. La structure et le fonctionnement de telles stations de formage 36A, 36B, 36C, 36D, 36E, 36F, 36G, 36H et, plus généralement, de la machine de formage 10 sont connus en tant que tels et ne seront pas décrit plus en détail ici.

La machine de formage 8 est par ailleurs également un dispositif de transport positif, c'est-à-dire que la machine de formage 10 est agencé pour que la position d'une préforme 4 soit toujours connue dans l'installation de production 1. La machine de formage 10 est entraînée en rotation autour de l'axe A' au moyen d'un deuxième moteur synchrone. Plus précisément, la roue de formage 40 est entraînée en rotation par le deuxième moteur synchrone. Comme mentionné précédemment, a position angulaire d'un moteur synchrone étant connue à tout instant, il est donc possible de connaître la position de la roue de formage 40 à chaque instant, et donc d'en déduire la position des stations de formage 36A, 36B, 36C, 36D, 36E, 36F, 36G, 36H dans l'installation de production 1 à chaque instant. De ce fait, on connait à chaque instant la position d'une préforme 4 dans la machine de transfert, et plus généralement dans l'installation de production 1. En particulier, à chaque instant, la position angulaire des éléments de préhension 36A, 36B, 36C, 36D, 36E, 36F, 36G, 36H par rapport au point d'entrée 42 de la machine formage 8 est connue.

Ainsi, chaque préforme 4 de la succession de préformes est transportée par un élément de préhension 28A, 28B, 28C, 28D depuis le point d'entrée 30 de la machine de transfert 8 jusqu'au point de sortie 32 de la machine de transfert 8, où la préforme est transférée à une station de formage 36A, 36B, 36C, 36D, 36E, 36F, 36G, 36H en son point d'entrée 42. De sorte que la préforme 4 puisse être reçu dans le moule 38, au point d'entrée 42 de la machine de formage 10, le point de sortie 32 de la machine de transfert 8 correspond au point d'entrée 42 de la machine de formage 10, c'est-à-dire que la sortie 32 de la machine de transfert 8 est disposée dans la continuité de l'entrée 42 de la machine de formage 10.

On note que le point 32 de sortie de la machine de transfert 8, coïncide avec le point 42 d'entrée de la machine 10 de formage du récipient, et constitue un point de transfert 32, 42 entre la machine 8 et la machine 10.

De plus, selon l'invention, la machine de transfert 8 et la machine de formage 10 sont « appairées », c'est-à-dire que qu'un élément de préhension 28A, 28B, 28C, 28D identifié de la machine de transfert 8 et une station de formage 36A, 36B, 36C, 36D, 36E, 36F, 36G, 36H de la machine de formage 10 fonctionnent en coopération pour traiter une préforme 4. Plus précisément, chaque station de formage 36A, 36B, 36C, 36D, 36E, 36F, 36G, 36H est associé à un élément de préhension identifié 28A, 28B, 28C, 28D, de sorte que lorsque l'élément de préhension identifié 28A, 28B, 28C, 28D se trouve au point de sortie 32 de la machine de transfert 8, la station de formage 36A, 36B, 36C, 36D, 36E, 36F, 36G, 36H associée se trouve au point d'entrée 42 de la machine de formage 10. Ainsi, on connaît le trajet suivi par une préforme 4 dès que l'on connaît l'élément de préhension 28A, 28B, 28C, 28D par laquelle la préforme passe. Grâce à ses dispositions, en cas de détection d'un récipient défectueux, il est possible de remonter dans la chaîne de fabrication dudit récipient défectueux et d'identifier la station de traitement du récipient ayant conduit à la fabrication du récipient défectueux.

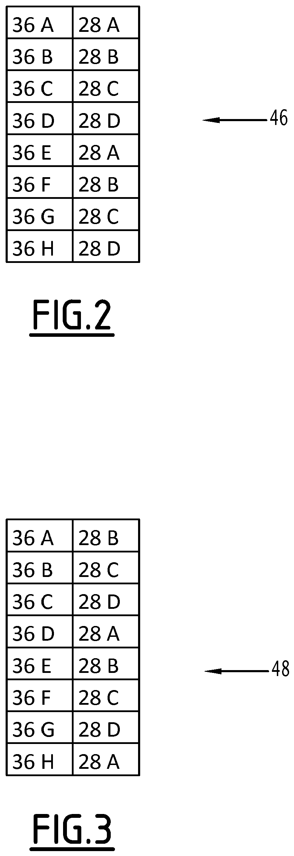

Dans les exemples détaillés sur les figures, la machine de formage 10 comporte deux fois plus de stations de formage 36A, 36B, 36C, 36D, 36E, 36F, 36G, 36H que d'éléments de préhension 28A, 28B, 28C, 28D. Dans l'exemple du mode de réalisation détaillé, un élément de préhension identifié 28A, 28B, 28C, 28D est associé à deux stations de formage 36A, 36B, 36C, 36D, 36E, 36F, 36G, 36H selon une liste de binômes d'appairage prédéterminée 46, comprenant pour chaque binôme, une première station et une deuxième station destinées à arriver en même temps au point de transfert 32, 42. La liste de binômes d'appairage prédéterminée 46 est une liste enregistrée dans la mémoire 34 de l'unité de contrôle 12. Par exemple, une telle liste de binômes d'appairage prédéterminée 46 est détaillée sur la Fig. 2. On voit, dans cette liste, qu'une station de formage 36A, 36B, 36C, 36D, 36E, 36F, 36G, 36H est associé à un élément de préhension 28A, 28B, 28C, 28D. Ainsi, lorsque l'élément de préhension 28A se trouve au point de sortie 32 de la machine de transfert 8, la station de formage 36A ou 36E se trouve au point d'entrée 42 de la machine de formage 10. De même, lorsque l'élément de préhension 28B se trouve au point de sortie 32 de la machine de transfert 8, la station de formage 36B se trouve au point d'entrée 42 de la machine de formage 10. Il est en de même pour la suite de la liste de binômes d'appairage prédéterminée 46.

Dans le cas d'espèce, la machine de formage 10 comporte deux fois plus de stations de formage 36A, 36B, 36C, 36D, 36E, 36F, 36G, 36H que d'éléments de préhension 28A, 28B, 28C, 28D. Il en résulte que, comme on le voit sur la liste de binômes d'appairage prédéterminée 46, un même élément de préhension 28A, 28B, 28C, 28D identifié est associé à deux stations de formage 36A, 36B, 36C, 36D, 36E, 36F, 36G, 36H. A titre d'exemple, conformément à la liste prédéterminée 46, on voit que l'élément de préhension 28A est associé à la fois à la station de formage 36 A et à la station de formage 36E.

Par ailleurs, de sorte à assurer la synchronisation de la machine de transfert 8 et de la machine de formage 10, c'est-à-dire qu'un élément de préhension se trouve au point de sortie 32 de la machine de transfert 8 et qu'une station de formage 36A, 36B, 36C, 36D, 36E, 36F, 36G, 36H se trouve, en même temps, au point d'entrée 42 de la machine de formage 10, et à maintenir l'appairage des deux machines 8, 10, la machine de transfert a, dans cet exemple, une vitesse de rotation deux fois plus élevée que la machine de formage.

Comme expliqué précédemment, la machine de transfert 8 et la machine de formage 10 peuvent comprendre un nombre variable respectivement d'éléments de préhension 28A, 28B, 28C, 28D et de stations de formage 36A, 36B, 36C, 36D, 36E, 36F, 36G, 36H. Pour paramétrer l'appairage, les machines de traitement 8, 10 comportent 2ⁿ stations, n'étant un nombre entier. Cela permet de faciliter le réglage de la synchronisation des deux machines 8, 10 et de simplifier l'appairage des éléments de préhension 28A, 28B, 28C, 28D et des stations de formage 36A, 36B, 36C, 36D, 36E, 36F, 36G, 36H. Dans le cas d'espèce, le nombre d'éléments de préhension 28A, 28B, 28C, 28D est de quatre, n'étant égal à 2, et le nombre de stations de formage 36A, 36B, 36C, 36D, 36E, 36F, 36G, 36H est égal à 8, n étant égal à 3 . Par ailleurs, le fait que le nombre de stations de formage est un multiple de deux du nombre d'éléments de préhension simplifie encore l'appairage.

Le procédé de réglage de l'installation 1 va à présent être décrit. On entend ici par « réglage », la synchronisation des machines de transfert 8 et de formage 10 et l'appairage des éléments de préhension 28A, 28B, 28C, 28D et des stations de formage 36A, 36B, 36C, 36D, 36E, 36F, 36G, 36H.

Dans une première étape, dite de synchronisation initiale, la machine de transfert 8 et la machine de formage 10 sont initialement synchronisée en rotation pour que lorsque qu'un élément de préhension 28A, 28B, 28C, 28D se trouve au point de sortie 32 de la station de transfert 8, une station de formage 36A, 36B, 36C, 36D, 36E, 36F, 36G, 36H se trouve au point d'entrée 42 de la machine de formage 10.

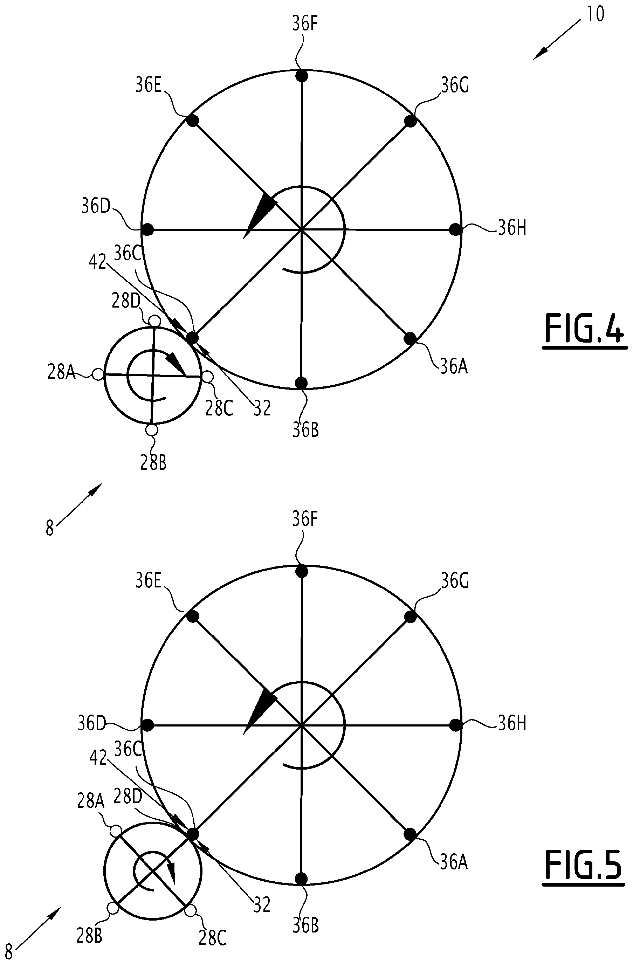

Dans une première sous-étape de l'étape de synchronisation initiale, représentée sur la Fig. 4, la machine de transfert 8 et la machine de formage 10 sont mises à l'arrêt de sorte qu'une station de formage 36A, 36B, 36C, 36D, 36E, 36F, 36G, 36H se trouve au point d'entrée 42 de la machine de formage 10. Dans le cas d'espèce, il s'agit de la station de formage 36C.

Dans une deuxième sous-étape de l'étape de synchronisation initiale, la position angulaire des éléments de préhension 28A, 28B, 28C, 28D par rapport au point de sortie 32 de la machine transfert 8 est déterminée.

Dans une troisième sous-étape de l'étape de synchronisation initiale, la machine de transfert 8 est mise en rotation de sorte à amener un élément de préhension 28A, 28B, 28C, 28D au point de sortie 32 de la machine de transfert 8. Par exemple, l'élément de préhension 28A, 28B, 28C, 28D amené au point de sortie 32 de la machine de transfert est l'élément de préhension la plus proche dudit point de sortie 32, selon le sens de rotation de la machine de transfert 8. Dans le cas d'espèce, la machine de transfert 8 tourne dans le sens anti-trigonométrique, c'est-à-dire dans le sens des aiguilles d'une montre, comme matérialisé par la flèche au centre de la roue 26. Ainsi, comme visible sur la Fig. 4, l'élément de préhension 28D est l'élément de préhension le plus proche de la sortie 32 de la machine de transfert 8. Comme visible sur la Fig. 5, l'élément de préhension 28D est donc amené au point de sortie 32 de la machine de transfert 8, par une rotation d'un angle de 45 degrés environ.

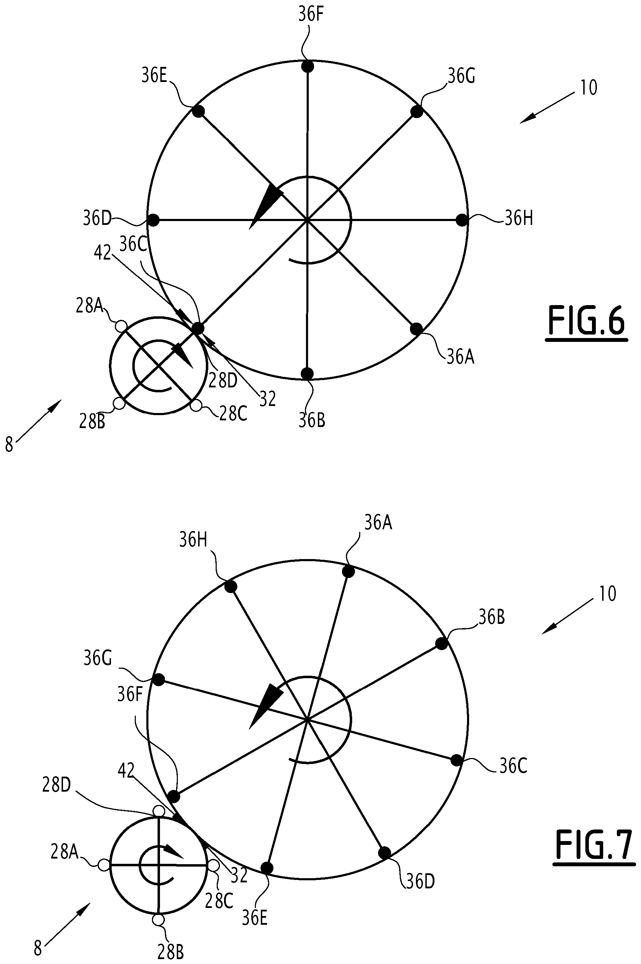

Dans une quatrième sous-étape de l'étape de synchronisation initiale, comme visible sur la Fig. 6, les machines de transfert et de formage 8, 10 sont mises en rotation synchronisée de sorte qu'un élément de préhension 28A, 28B, 28C, 28D se trouve au point de sortie de la machine de transfert en même temps qu'une station de formage 36A, 36B, 36C, 36D, 36E, 36F, 36G, 36H se trouve au point d'entrée 42 de la machine de formage 10. Dans le cas d'espèce, la machine de formage 10 est rotative dans le sens trigonométrique, c'est-à-dire dans le sens inverse des aiguilles d'une montre, comme matérialisé par la flèche au centre de la roue 40.

Lors de l'étape de synchronisation initiale, la position des éléments de préhension 28A, 28B, 28C, 28D et des stations de formage 36A, 36B, 36C, 36D, 36E, 36F, 36G, 36H est connue à chaque instant. Plus précisément, au cours de cette phase de synchronisation initiale, un calculateur **50** de l'unité de contrôle 12 de l'installation 1 récupère, au cours du temps, la position des éléments de préhension 28A, 28B, 28C, 28D par rapport au point de sortie de la machine de transfert, et la position des stations de formage 36A, 36B, 36C, 36D, 36E, 36F, 36G, 36H par rapport au point d'entrée 42 de la machine de formage. Le calculateur 50 établit alors une liste de mise en phase initiale, non-appairée **48** des éléments de préhension 28A, 28B, 28C, 28D et des stations de formage 36A, 36B, 36C, 36D, 36E, 36F, 36G, 36H, c'est à-dire une liste qui identifie quel élément de préhension est associé avec quelle station de formage 36A, 36B, 36C, 36D, 36E, 36F, 36G, 36H, respectivement au point de sortie 32 de la machine de transfert 8 et au point d'entrée 42 de la machine de formage 10. Cette liste de mise en phase initiale 48 est représentée sur la Fig. 3.

La liste de mise en phase initiale 48 est enregistrée dans la mémoire 34 de l'unité de contrôle. Puis, le calculateur 50 compare la liste d'appairage initiale avec la liste de binômes d'appairage prédéterminée 46 enregistrée. Si les deux listes sont différentes, c'est-à-dire qu'une station de formage n'est pas associé à un élément de préhension identifié dans la liste de binômes d'appairage prédéterminée 46, une deuxième phase du procédé de réglage de l'installation 1 est mise en œuvre.

Dans la deuxième étape du procédé de réglage, dite de désynchronisation, la rotation de la machine de transfert 8 et de la machine de formage 10 est désynchronisée. Lors de cette étape, la vitesse de rotation de la machine de transfert 8 est modifiée de sorte à amener un élément de préhension 28A, 28B, 28C, 28D identifié au point de sortie 32 de la machine de transfert 8 et la station de formage 36A, 36B, 36C, 36D, 36E, 36F, 36G, 36H associée à l'élément de préhension identifié 28A, 28B, 28C, 28D au point d'entrée 42 de la machine de formage 10, selon la liste de binômes d'appairage prédéterminée 46. Autrement dit, lorsqu'une station de formage 36A, 36B, 36C, 36D, 36E, 36F, 36G, 36H associée se trouve au point d'entrée 42 de la machine de formage 10, l'élément de préhension 28A, 28B, 28C, 28D identifié se trouve au point de sortie 32 de la machine de transfert 8. Cette phase de désynchronisation est représentée sur la Fig. 7 où l'on distingue une désynchronisation entre les deux machines 8 et 10.

Dans le cas d'espèce, la vitesse de rotation de la machine de transfert 8 est augmentée de sorte qu'un élément de préhension 28A, 28B, 28C, 28D identifié dans la liste de binômes d'appairage prédéterminée 46 arrive au point de sortie 32 de la machine de transfert 8 en même temps que la station de formage associée à cet élément de préhension 28A, 28B, 28C, 28D identifié au point d'entrée 42 de la machine de formage 10. Pour ce faire, l'unité de contrôle 12 transmet une commande de vitesse de rotation à l'arbre de rotation de la machine de transfert 8.

Dans l'exemple du mode de réalisation décrit ici, il est avantageux que ce soit la vitesse de rotation de la machine de transfert qui soit augmentée. En effet, la machine de transfert 8 étant moins lourde que la machine de formage 10, il est plus aisé de la faire rapidement monter en rotation. En outre, la vitesse de rotation de la machine de transfert 8 est plus facilement contrôlée que la vitesse de rotation de la machine de formage 10, car la machine de transfert 8 possède un moment d'inertie plus faible que celui de la machine de formage 10. Par ailleurs, il est avantageux de réaliser la phase de désynchronisation durant une montée en puissance de la machine de formage 10. On gagne ainsi du temps dans le réglage de l'installation 1.

En variante, et à titre d'alternative, durant la phase de désynchronisation, la vitesse de rotation de la machine de formage 10 est augmentée

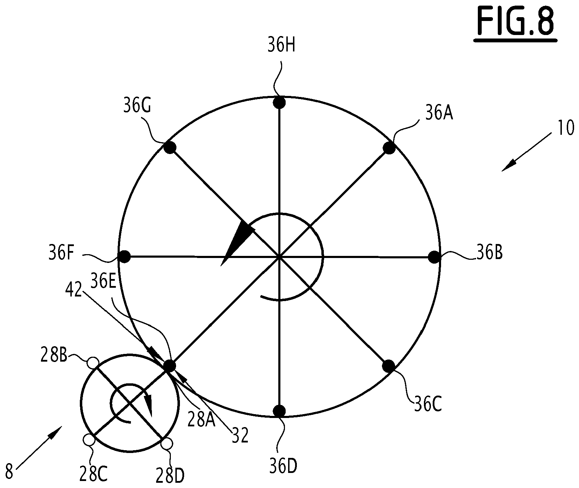

Dans une troisième étape, dite de « synchronisation », une fois qu'un élément de préhension 28A, 28B, 28C, 28D identifié est associé à une station de formage 36A, 36B, 36C, 36D, 36E, 36F, 36G, 36H selon la liste d'appairage prédéterminée 46, la rotation des machines de transfert 8 et de formage 10 est synchronisée pour que, lorsqu'une station de préhension 28A, 28B, 28C, 28D identifiée se trouve au point de sortie 32 de la machine de transfert 8, la station de formage 36A, 36B, 36C, 36D, 36E, 36F, 36G, 36H associée audit élément de préhension 28A, 28B, 28C, 28D identifié se trouve au point d'entrée 42 de la machine de formage 10. L'unité de contrôle 12 adapte alors la vitesse de rotation de la machine de transfert 8 en transmettant à l'arbre de rotation de la machine de transfert 8 une commande de vitesse, en l'espèce une commande de décélération. Comme visible sur la Fig. 8, les éléments de préhension 28A, 28B, 28C, 28D de la machine de transfert 8 et les stations de formage 36A, 36B, 36C, 36D, 36E, 36F, 36G, 36H de la machine de formage 10 sont appairés selon la liste d'appairage prédéterminée 46.

Le procédé de réglage comporte, par exemple, une étape additionnelle dite de « détection ». Cette étape de détection est réalisée avant l'étape de désynchronisation détaillée précédemment. Lors de cette étape, la présence de préformes 4 est détectée dans l'une ou l'autre des machines de transfert 8 et/ou de formage 10. Du fait que la machine de transfert 8 et la machine de formage 10 sont des dispositifs de transport positif, la position d'une préforme 4 est toujours connue dans l'installation 1. On sait donc si des préformes sont présentes dans la machine de transfert 8 et dans la machine de formage 10.

En variante, les éléments de préhension 28A, 28B, 28C, 28D et les stations de formage 36A, 36B, 36C, 36D, 36E, 36F, 36G, 36H sont munis de capteurs de la présence d'une préforme 4.Les données issues des capteurs sont par exemple transmises à l'unité de contrôle 12 de l'installation 1.

Dans le cas de la détection de la présence de préformes dans la machine de traitement ou dans la machine de formage, l'étape de désynchronisation est mise en attente. Dans ce cas, par exemple, de nouvelles préformes ne sont plus envoyées dans la station de chauffage. Les préformes 4 déjà chauffées sont évacuées des machines de transfert 8 et de formage 10 vers un endroit dédié.

Une fois que les machines de transfert 8 et de formage sont vidées, l'étape de désynchronisation est mise en œuvre.

Grâce à des dispositions, on évite une percussion des éléments de préhension et des stations de formage.

L'invention a été décrite en référence à une machine de transfert et une machine de formage. En variante, l'une et l'autre de ces machines pourrait être indifféremment une machine de transfert, une machine de formage, une machine de remplissage, une machine d'étiquetage, une machine pour fermer les récipients, etc. L'une et l'autre de ces deux machines pourrait aussi être deux machines identiques. Dans encore une variante, bien que l'invention est décrite en relation avec deux machines, pour des soucis de facilité de compréhension, l'installation comprend plus de deux machines de traitement. La synchronisation des machines de traitement et l'appairage des stations de ces machines peuvent être réalisés en répétant le procédé décrit précédemment.

En outre, les machines étant entraînées par des moteurs synchrones, il n'y a pas de liaison mécanique entre les machines, c'est-à-dire pas de courroie de transmission du mouvement de rotation entre les machines, la synchronisation des machines de traitement entre elles et l'appairage des stations de traitement de ces machines peuvent donc être perdus. Le procédé décrit précédemment est utilisable pour synchroniser les machines de traitement et appairer les stations de ces machines lors du démarrage initial desdites machines ou après un arrêt desdites machines de traitement, après un incident par exemple.

En outre, dans la présente description les termes « entrée » et « sortie » se réfèrent au sens de circulation des préformes 4 dans l'installation. Dans l'exemple du mode de réalisation illustré précédemment, la machine de transfert est en amont de la machine de formage 10. Dans d'autres modes de réalisation, la machine de transfert 8 est en aval de la machine de formage 10. Dans ce cas, les termes « point de sortie de la machine de transfert » et « point d'entrée de la machine de formage » deviennent « point d'entrée de la machine de transfert » et « point de sortie de la machine de formage ».

## Revendications

1. Procédé de réglage d'une installation de traitement d'une succession de récipients (4) comprenant :
une phase de fonctionnement au cours de laquelle on entraine en rotation une première machine (8) de traitement de récipients (4) équipée d'une pluralité de premières stations (28A, 28B, 28C, 28D) et on entraine en rotation une deuxième machine (10) de traitement de récipients (4) équipée d'une pluralité de deuxièmes stations (36A, 36B, 36C, 36D, 36E, 36F, 36G, 36H), l'installation présentant un point de transfert de chacun des récipients de la première à la deuxième machine de traitement
la phase de fonctionnement comprenant une étape de fonctionnement synchronisé dans laquelle les vitesses de rotation des premières et deuxième machines de traitement sont synchronisées de manière que la fréquence de passage de deux premières stations successives au point de transfert est égale à la fréquence de passage de deux deuxièmes stations successives au même point de transfert,
la phase de fonctionnement comprend une étape de fonctionnement synchronisé et appairé dans laquelle la rotation synchronisée des première et deuxième machines s'accompagne d'une succession répétitive de binômes d'appairage au point de transfert, chaque binôme d'appairage comprenant une première station (28i) arrivant au point de transfert au même instant qu'une deuxième station (36j) de manière à permettre le transfert d'un récipient de la première station du binôme d'appairage vers la deuxième station du binôme d'appairage,
le procédé de réglage étant **caractérisé en ce que** l'entrainement en rotation de la première machine de traitement se fait au moyen d'un premier moteur d'entrainement, l'entrainement de la deuxième machine de traitement se fait au moyen d'un deuxième moteur d'entrainement distinct du premier moteur, le procédé de réglage comprenant une étape d'appairage désynchronisé au cours de laquelle on entraine en rotation la première machine de traitement et/ou la deuxième machine de traitement dans un fonctionnement désynchronisé entre elles de manière à amener en coïncidence au même moment au point de transfert une première station et une deuxième station d'un des binômes d'appairage.

2. Procédé selon la revendication 1, étant un procédé de réglage d'une installation de production d'une succession de récipients à partir d'une succession de préformes, et dans lequel :
la première machine de traitement est une roue d'amenée des préformes et la deuxième machine de traitement est une machine de formage de récipients par soufflage des préformes,
ou dans lequel la première machine de traitement est une machine de formage de récipients à partir de préformes et la deuxième machine de traitement est une roue de sortie de récipients formés.

3. Procédé selon l'une des revendications précédentes, dans lequel au cours de l'étape d'appairage désynchronisé, on détermine à un instant donné, d'une part la distance angulaire entre une première station d'un des binômes d'appairage et le point de transfert, et d'autre part la distance angulaire entre la deuxième station dudit binôme d'appairage au même point de transfert, l'une des première ou deuxième machine présente une survitesse de rotation par rapport à la vitesse qu'aurait ladite première et deuxième machine de traitement si elles étaient synchronisées, la survitesse étant calculée de manière à amener progressivement en coïncidence au même moment au point de transfert la première station et la deuxième station dudit binôme d'appairage.

4. Procédé selon la revendication précédente, dans lequel la phase d'appairage désynchronisé est suivie d'un fonctionnement synchronisé et appairé, et/ou dans lequel la survitesse est régulée de manière à optimiser la rapidité et/ou la précision de la phase d'appairage désynchronisé, et/ou d'optimiser la souplesse de la transition entre la phase d'appairage désynchronisé et la phase suivante de fonctionnement synchronisé et appairé.

5. Procédé de réglage selon l'une des revendications 1 ou 2, comprenant, antérieurement à la phase d'appairage désynchronisé, une étape préalable de mise en phase non-appairée faisant coïncider au point de transfert une première station et une deuxième station, ne correspondant pas à un des binômes d'appairage, l'étape de mise en phase non-appairée comprenant :
- amener l'une des machines parmi la première ou la deuxième machine de traitement à ce qu'une des stations de ladite machine arrive au point de transfert, puis immobiliser ladite machine, de préférence, la station de ladite machine qui est la plus proche du point de transfert,
- amener l'autre machine parmi la première ou la deuxième machine de traitement à ce qu'une des stations de ladite machine arrive au point de transfert.

6. Procédé selon la revendication précédente, comprenant, entre l'étape préalable de mise en phase non-appairée, et l'étape d'appairage désynchronisé, une étape intermédiaire de fonctionnement synchronisé et en phase mais non-appairé.

7. Procédé de réglage selon l'une quelconque des revendications précédentes, comprenant en outre l'étape de :
- détection de la présence de récipients (4) dans l'une ou l'autre des première (8) et deuxième machines (10) de traitement, et
si l'une ou l'autre des première (8) et deuxième machines (10) de traitement comporte au moins un récipient (4),
- mettre en attente l'étape d'appairage désynchronisé,
- vider les récipients (4) de l'une ou des deux machines de traitement (8, 10), et
- effectuer l'étape d'appairage désynchronisé.

8. Installation de traitement d'une succession de récipients (4) comprenant au moins :
- une première machine (8) de traitement de récipients (4), comprenant une pluralité de premières stations (28A, 28B, 28C, 28D) mobiles en rotation, ladite première machine (8) de traitement étant entraînée en rotation par un premier moteur synchrone,
- une deuxième machine (10) de traitement de récipients (4), comprenant une pluralité de deuxièmes stations (36A, 36B, 36C, 36D, 36E, 36F, 36G, 36H) mobiles en rotation, ladite deuxième machine (10) de traitement étant entraînée en rotation par un deuxième moteur synchrone,
chaque récipient (4) de la succession de récipients (4) étant transféré à une deuxième station (36A, 36B, 36C, 36D, 36E, 36F, 36G, 36H) en un point de transfert (32),
**caractérisée en ce que** l'installation présente une succession de binômes d'appairage comprenant chacun une première station (28i) et une deuxième station, ainsi qu'une unité de contrôle pilotant le premier et le deuxième moteur synchrone de manière à amener au même instant au point de transfert la première station et le deuxième station d'un binôme d'appairage.

9. Installation selon la revendication précédente, dans laquelle chaque récipient (4) de la succession de récipients (4) est reçu par une première station (28A, 28B, 28C, 28D) en un point d'entrée de la première machine (8) de traitement et est délivré en un point de sortie (44) de la deuxième machine (10) de traitement, et/ou dans laquelle l'unité de contrôle pilote le premier et le deuxième moteur synchrone de manière à amener successivement au point de transfert la première station et le deuxième station des binôme d'appairage successifs.

10. Installation selon l'une quelconque des revendications 8 ou 9, dans laquelle les première (8) et deuxième (10) machines de traitement comportent des première (26) et deuxième roues (40) d'entraînement en rotation des premières (28A, 28B, 28C, 28D) et deuxièmes stations (36A, 36B, 36C, 36D, 36E, 36F, 36G, 36H), les premières (28A, 28B, 28C, 28D) et deuxièmes stations (36A, 36B, 36C, 36D, 36E, 36F, 36G, 36H) étant régulièrement réparties angulairement respectivement sur chacune des première (26) et deuxième roues (40) d'entraînement en rotation.

11. Installation selon l'une quelconque des revendications 8 à 10, dans laquelle les premières (28A, 28B, 28C, 28D) et deuxièmes stations (36A, 36B, 36C, 36D, 36E, 36F, 36G, 36H) sont mises en rotation autour de deux axes (A, A') de rotation indépendants l'un de l'autre.

12. Installation selon l'une quelconque des revendications 8 à 11, dans laquelle la première machine (8) de traitement est une machine de transfert de récipients (4) et la deuxième machine (10) de traitement est une machine de formage de récipients (4), les premières stations (28A, 28B, 28C, 28D) comprenant des éléments de préhension des récipients (4) et les deuxième stations (36A, 36B, 36C, 36D, 36E, 36F, 36G, 36H) comprenant des stations de formage des récipients (4).

13. Installation selon l'une quelconque des revendications 8 à 12, dans laquelle l'une des première ou deuxième machine de traitement est une machine principale de traitement, comprenant Np stations principales (36A, 36B, 36C, 36D, 36E, 36F, 36G, 36H), l'autre des première ou deuxième machines de traitement est une machine auxiliaire de traitement comprenant Na stations auxiliaires (28A, 28B, 28C, 28D), Np étant égale au produit de Na par un entier k supérieur ou égale à un..

14. installation selon l'une des revendications 8 à 13, dans laquelle chaque moteur synchrone comprend un codeur de position angulaire.

## Patentansprüche

1. Verfahren zur Regelung einer Anlage zur Bearbeitung einer Folge von Behältern (4), das enthält:
eine Betriebsphase, während der eine erste Maschine (8) zur Bearbeitung von Behältern (4), die mit einer Vielzahl erster Stationen (28A, 28B, 28C, 28D) ausgestattet ist, in Drehung versetzt wird, und eine zweite Maschine (10) zur Bearbeitung von Behältern (4), die mit einer Vielzahl zweiter Stationen (36A, 36B, 36C, 36D, 36E, 36F, 36G, 36H) ausgestattet ist, in Drehung versetzt wird, wobei die Anlage einen Übertragungspunkt jedes der Behälter von der ersten zur zweiten Bearbeitungsmaschine aufweist,
wobei die Betriebsphase einen Schritt synchronisierten Betriebs enthält, in dem die Drehgeschwindigkeiten der ersten und zweiten Bearbeitungsmaschinen so synchronisiert sind, dass die Durchlauffrequenz von zwei ersten aufeinanderfolgenden Stationen am Übertragungspunkt gleich der Durchlauffrequenz von zwei zweiten aufeinanderfolgenden Stationen am gleichen Übertragungspunkt ist,
wobei die Betriebsphase einen Schritt synchronisierten und gepaarten Betriebs enthält, in dem die synchronisierte Drehung der ersten und der zweiten Maschine von einer wiederholten Folge von Paarungs-Binomen am Übertragungspunkt begleitet wird, wobei jedes Paarungs-Binom eine erste Station (28i) enthält, die am Übertragungspunkt zum gleichen Zeitpunkt wie eine zweite Station (36j) ankommt, um die Übertragung eines Behälters von der ersten Station des Paarungs-Binoms zur zweiten Station des Paarungs-Binoms zu erlauben,
wobei das Regelungsverfahren **dadurch gekennzeichnet ist, dass** der Drehantrieb der ersten Bearbeitungsmaschine mittels eines ersten Antriebsmotors erfolgt, der Antrieb der zweiten Bearbeitungsmaschine mittels eines zweiten Antriebsmotors anders als der erste Motor erfolgt, wobei das Regelungsverfahren einen Schritt desynchronisierter Paarung enthält, während dessen die erste Bearbeitungsmaschine und/oder die zweite Bearbeitungsmaschine in einem zueinander desynchronisierten Betrieb in Drehung versetzt werden, um zum gleichen Zeitpunkt eine erste Station und eine zweite Station eines der Paarungs-Binome am Übertragungspunkt in Übereinstimmung zu bringen.

2. Verfahren nach Anspruch 1, das ein Regelungsverfahren einer Anlage zur Erzeugung einer Folge von Behältern ausgehend von einer Folge von Vorformlingen ist, und wobei:
die erste Bearbeitungsmaschine ein Zuführrad der Vorformlinge ist, und die zweite Bearbeitungsmaschine eine Maschine zum Formen von Behältern durch Blasen der Vorformlinge ist,
oder wobei die erste Bearbeitungsmaschine eine Maschine zum Formen von Behältern ausgehend von Vorformlingen ist, und die zweite Bearbeitungsmaschine ein Austrittsrad von geformten Behältern ist.

3. Verfahren nach einem der vorhergehenden Ansprüche, wobei während des Schritts der desynchronisierten Paarung zu einem gegebenen Zeitpunkt einerseits der Winkelabstand zwischen einer ersten Station eines der Paarungs-Binome und andererseits der Winkelabstand zwischen der zweiten Station des Paarungs-Binoms am gleichen Übertragungspunkt bestimmt wird, wobei eine der ersten und zweiten Maschinen eine Überdrehgeschwindigkeit bezüglich der Geschwindigkeit aufweist, die die erste und die zweite Bearbeitungsmaschine hätten, wenn sie synchronisiert wären, wobei die Übergeschwindigkeit so berechnet wird, dass zum gleichen Zeitpunkt am Übertragungspunkt die erste Station und die zweite Station des Paarungs-Binoms progressiv in Übereinstimmung gebracht werden.

4. Verfahren nach dem vorhergehenden Anspruch, wobei auf die Phase desynchronisierter Paarung ein synchronisierter und gepaarter Betrieb folgt, und/oder wobei die Übergeschwindigkeit so reguliert wird, dass die Schnelligkeit und/oder die Präzision der Phase desynchronisierter Paarung optimiert wird, und/oder die Flexibilität des Übergangs zwischen der Phase desynchronisierter Paarung und der folgenden Phase synchronisierten und gepaarten Betriebs optimiert wird.

5. Regelungsverfahren nach einem der Ansprüche 1 oder 2, das vor der Phase desynchronisierter Paarung einen vorhergehenden Schritt des Versetzens in eine nichtgepaarte Phase enthält, die am Übertragungspunkt eine erste Station und eine zweite Station in Übereinstimmung bringt, die nicht einem der Paarungs-Binome entsprechen, wobei der Schritt der Versetzens in eine nicht gepaarte Phase enthält:
- eine der Maschinen unter der ersten oder der zweiten Bearbeitungsmaschine dazu zu bringen, dass eine der Stationen der Maschine am Übertragungspunkt ankommt, dann die Maschine anzuhalten, vorzugsweise die Station der Maschine, die dem Übertragungspunkt am nächsten ist,
- die andere Maschine unter der ersten oder zweiten Bearbeitungsmaschine dazu zu bringen, dass eine der Stationen der Maschine am Übertragungspunkt ankommt.

6. Verfahren nach dem vorhergehenden Anspruch, das zwischen dem vorhergehenden Schritt des Versetzens in eine nicht gepaarte Phase und dem Schritt desynchronisierter Paarung einen Zwischenschritt eines synchronisierten und phasengleichen, aber nicht gepaarten Betriebs enthält.

7. Regelungsverfahren nach einem der vorhergehenden Ansprüche, das außerdem dem folgenden Schritt aufweist:
- Erfassen des Vorhandenseins von Behältern (4) in der einen oder anderen der ersten (8) und zweiten Bearbeitungsmaschinen (10), und
wenn die eine oder die andere der ersten (8) und zweiten Bearbeitungsmaschinen (10) mindestens einen Behälter (4) aufweist,
- Versetzen des Schritts der desynchronisierten Paarung in Wartestellung,
- Leeren der Behälter (4) der einen oder der zwei Bearbeitungsmaschinen (8, 10), und
- Ausführen des Schritts der desynchronisierten Paarung.

8. Anlage zur Bearbeitung einer Folge von Behältern (4), die mindestens enthält:
- eine erste Maschine (8) zur Bearbeitung von Behältern (4), die eine Vielzahl erster drehbeweglicher Stationen (28A, 28B, 28C, 28D) enthält, wobei die erste Bearbeitungsmaschine (8) von einem ersten Synchronmotor in Drehung versetzt wird,
- eine zweite Maschine (10) zur Bearbeitung von Behältern (4), die eine Vielzahl zweiter drehbeweglicher Stationen (36A, 36B, 36C, 36D, 36E, 36F, 36G, 36H) enthält, wobei die zweite Bearbeitungsmaschine (10) von einem zweiten Synchronmotor in Drehung versetzt wird,
wobei jeder Behälter (4) der Folge von Behältern (4) an einem Übertragungspunkt (32) an eine zweite Station (36A, 36B, 36C, 36D, 36E, 36F, 36G, 36H) übertragen wird,
**dadurch gekennzeichnet, dass** die Anlage eine Folge von Paarungs-Binomen aufweist, die je eine erste Station (28i) und eine zweite Station enthalten, sowie eine Kontrolleinheit aufweist, die den ersten und den zweiten Synchronmotor so steuert, dass die erste Station und die zweite Station eines Paarungs-Binoms zum gleichen Zeitpunkt zum Übertragungspunkt gebracht werden.

9. Anlage nach dem vorhergehenden Anspruch, wobei jeder Behälter (4) der Folge von Behältern (4) von einer ersten Station (28A, 28B, 28C, 28D) an einem Eingangspunkt der ersten Bearbeitungsmaschine (8) empfangen wird und an einem Ausgangspunkt (44) der zweiten Bearbeitungsmaschine (10) geliefert wird, und/oder wobei die Kontrolleinheit den ersten und den zweiten Synchronmotor so steuert, dass die erste Station und die zweite Station der aufeinanderfolgenden Paarungs-Binome nacheinander zum Übertragungspunkt gebracht werden.

10. Anlage nach einem der Ansprüche 8 oder 9, wobei die erste (8) und zweite (10) Bearbeitungsmaschinen erste (26) und zweite Räder (40) für den Drehantrieb der ersten (28A, 28B, 28C, 28D) und zweiten Stationen (36A, 36B, 36C, 36D, 36E, 36F, 36G, 36H) aufweisen, wobei die ersten (28A, 28B, 28C, 28D) und zweiten Stationen (36A, 36B, 36C, 36D, 36E, 36F, 36G, 36H) auf jedem der ersten (26) und zweiten Drehantriebsräder (40) winkelmäßig gleichmäßig verteilt sind.

11. Anlage nach einem der Ansprüche 8 bis 10, wobei die ersten (28A, 28B, 28C, 28D) und zweiten Stationen (36A, 36B, 36C, 36D, 36E, 36F, 36G, 36H) um zwei voneinander unabhängige Drehachsen (A, A') in Drehung versetzt werden.

12. Anlage nach einem der Ansprüche 8 bis 11, wobei die erste Bearbeitungsmaschine (8) eine Maschine zur Übertragung von Behältern (4) ist, und die zweite Bearbeitungsmaschine (10) eine Maschine zum Formen von Behältern (4) ist, wobei die ersten Stationen (28A, 28B, 28C, 28D) Elemente zum Ergreifen der Behälter (4) enthalten, und die zweiten Stationen (36A, 36B, 36C, 36D, 36E, 36F, 36G, 36H) Formungsstationen der Behälter (4) enthalten.

13. Anlage nach einem der Ansprüche 8 bis 12, wobei eine der ersten und zweiten Bearbeitungsmaschinen eine Hauptbearbeitungsmaschine ist, die Np Hauptstationen (36A, 36B, 36C, 36D, 36E, 36F, 36G, 36H) enthält, die andere der ersten und zweiten Bearbeitungsmaschinen eine Hilfsbearbeitungsmaschine ist, die Na Hilfsstationen (28A, 28B, 28C, 28D) enthält, wobei Np gleich dem Produkt aus Na und einer ganzen Zahl k größer als oder gleich eins ist.

14. Anlage nach einem der Ansprüche 8 bis 13, wobei jeder Synchronmotor einen Winkelstellungscodierer enthält.

## Claims

1. Method for adjusting an installation for treating a series of containers (4), comprising:
A phase of operation during which a first machine (8) for treating containers (4), equipped with a plurality of first stations (28A, 28B, 28C, 28D), is driven in rotation and a second machine (10) for treating containers (4), equipped with a plurality of second stations (36A, 36B, 36C, 36D, 36E, 36F, 36G, 36H), is driven in rotation, the installation having a point of transfer of each of the containers from the first to the second treatment machine the phase of operation comprising a step of synchronized operation in which the speeds of rotation of the first and second treatment machines are synchronized in such a manner that the frequency of passage of two first successive stations at the point of transfer is equal to the frequency of passage of two second successive stations at the same point of transfer,
the phase of operation comprises a step of synchronized and paired operation in which the synchronized rotation of the first and second machines is accompanied by a repeated series of pairing duos at the point of transfer, each pairing duo comprising a first station (28i) arriving at the point of transfer at the same instant as a second station (36j) in such a manner as to permit the transfer of a container from the first station of the pairing duo towards the second station of the pairing duo,
the adjustment method being **characterized in that** the driving in rotation of the first treatment machine is achieved by means of a first drive motor, the driving of the second treatment machine is achieved by means of a second drive motor distinct from the first motor, the adjustment method comprising a step of desynchronized pairing during which the first treatment machine and/or the second treatment machine is/are driven in rotation in a mutually desynchronized operation in such a manner as to bring a first station and a second station of one of the pairing duos to coincide, at the same moment, at the point of transfer.

2. Method according to Claim 1, being a method for adjusting an installation for producing a series of containers from a series of preforms, and wherein:
the first treatment machine is a wheel for supplying preforms and the second treatment machine is a machine for forming containers by blowing of the preforms,
or wherein the first treatment machine is a machine for forming containers from preforms and the second treatment machine is an outlet wheel for formed containers.

3. Method according to one of the preceding claims, wherein, during the step of desynchronized pairing, at a given instant, on the one hand, the angular distance between a first station of one of the pairing duos and the point of transfer and, on the other hand, the angular distance between the second station of said pairing duo at the same point of transfer are determined, the first or the second machine has a higher speed of rotation relative to the speed of said first and second treatment machine if they were synchronized, the higher speed being calculated in such a manner as to progressively bring the first station and the second station of said pairing duo to coincide, at the same moment, at the point of transfer.

4. Method according to the preceding claim, wherein the phase of desynchronized pairing is followed by a synchronized and paired operation, and/or wherein the higher speed is adjusted in such a manner as to optimize the rapidity and/or the precision of the phase of desynchronized pairing, and/or to optimize the flexibility of the transition between the phase of desynchronized pairing and the following phase of synchronized and paired operation.

5. Adjustment method according to one of Claims 1 or 2, comprising, prior to the phase of desynchronized pairing, a preliminary step of non-paired phasing causing a first station and a second station, not corresponding to one of the pairing duos, to coincide at the point of transfer, the step of non-paired phasing comprising:
- routing either the first or the second treatment machine such that one of the stations of said machine arrives at the point of transfer, then immobilizing said machine, preferably the station of said machine that is the closest to the point of transfer,
- routing the other of either the first or the second treatment machine such that one of the stations of said machine arrives at the point of transfer.

6. Method according to the preceding claim, comprising, between the prior step of non-paired phasing and the step of desynchronized pairing, an intermediate step of synchronized operation which is in phase but non-paired.

7. Adjustment method according to any one of the preceding claims, further comprising the step of:
- detecting the presence of containers (4) in one or the other of the first (8) and second (10) treatment machines, and
if one or the other of the first (8) and second (10) treatment machines comprises at least one container (4),
- placing the step of desynchronized pairing on standby,
- clearing the containers (4) from one or both treatment machines (8, 10), and
- carrying out the step of desynchronized pairing.

8. Installation for treating a series of containers (4), comprising at least:
- a first machine (8) for treating containers (4), comprising a plurality of first stations (28A, 28B, 28C, 28D) that can move in rotation, said first treatment machine (8) being driven in rotation by a first synchronous motor,
- a second machine (10) for treating containers (4), comprising a plurality of second stations (36A, 36B, 36C, 36D, 36E, 36F, 36G, 36H) that can move in rotation, said second treatment machine (10) being driven in rotation by a second synchronous motor, each container (4) in the series of containers (4) being transferred to a second station (36A, 36B, 36C, 36D, 36E, 36F, 36G, 36H) at a point of transfer (32),
**characterized in that** the installation has a series of pairing duos each comprising a first station (28i) and a second station, and also a control unit managing the first and the second synchronous motor in such a manner as to bring the first station and the second station of a pairing duo, at the same instant, to the point of transfer.

9. Installation according to the preceding claim, wherein each container (4) of the series of containers (4) is received by a first station (28A, 28B, 28C, 28D) at a point of entry of the first treatment machine (8) and is delivered, at a point of exit (44), from the second treatment machine (10), and/or wherein the control unit manages the first and the second synchronous motor in such a manner as to successively bring the first station and the second station of the successive pairing duos to the point of transfer.

10. Installation according to either of Claims 8 and 9, wherein the first (8) and second (10) treatment machines comprise first (26) and second (40) wheels for driving in rotation the first (28A, 28B, 28C, 28D) and second (36A, 36B, 36C, 36D, 36E, 36F, 36G, 36H) stations, the first (28A, 28B, 28C, 28D) and second (36A, 36B, 36C, 36D, 36E, 36F, 36G, 36H) stations being regularly distributed angularly respectively on each of the first (26) and second (40) wheels for driving in rotation.

11. Installation according to any one of Claims 8 to 10, wherein the first (28A, 28B, 28C, 28D) and second (36A, 36B, 36C, 36D, 36E, 36F, 36G, 36H) stations are rotated about two mutually independent axes (A, A') of rotation.

12. Installation according to any one of Claims 8 to 11, wherein the first treatment machine (8) is a machine for transferring containers (4) and the second treatment machine (10) is a machine for forming containers (4), the first stations (28A, 28B, 28C, 28D) comprising elements for gripping the containers (4) and the second stations (36A, 36B, 36C, 36D, 36E, 36F, 36G, 36H) comprising stations for forming the containers (4).

13. Installation according to any one of Claims 8 to 12, wherein either the first or the second treatment machine is a principal treatment machine, comprising Np principal stations (36A, 36B, 36C, 36D, 36E, 36F, 36G, 36H), the other of the first or second treatment machines is an auxiliary treatment machine comprising Na auxiliary stations (28A, 28B, 28C, 28D), Np being equal to the product of Na times an integer k greater than or equal to one.

14. Installation according to one of Claims 8 to 13, wherein each synchronous motor comprises an angular position encoder.
